# EUROPEAN PATENT APPLICATION

(11) **EP 1 223 548 A2**
(43) Date of publication of application: **17.07.2002**
(21) Application number: 02090003.1
(22) Date of filing: 08.01.2002
(51) Int. Cl.: G06T 1/00

(54) **Copyright information embedding method and apparatus**

(30) Priority: 10.01.2001 JP 2001002071
(71) Applicant: Monolith Co., Ltd., Tokyo 106-0045 (JP)
(72) Inventor: Akiyoshi, Kozo, Tokyo 106-0045 (JP); Akiyoshi, Nobuo, Tokyo 106-0045 (JP)
(74) Representative: Pfenning, Meinig & Partner

(57) **Abstract**

Original digital contents are inputted, and first copyright information on the inputted original contents is acquired. If it is proved by authentication that a user is authorized to alter the contents, any arbitrary image processing and/or audio processing is performed on the centents. Then, both the first copyright information on the original contents and second copyright information on secondary contents are imprinted into the secondary contents thus obtained as results of the processings.

## Description

The present invention relates to a digital content managing technology, and it particularly relates to method and apparatus for managing the copyright of contents.

With advanced digital technologies, network infrastructure and information equipments, unprecedented amounts of digital contents are being produced and distributed today. The digital contents, which show excellent signal noise resistance and various other advantages because of its digital nature, are believed to continue expanding its market size. However, there is a serious problem that keeps worrying the persons concerned, and it is the problem of copyright. In other words, the digital contents can be easily copied by PCs and other hardware readily available today. Unless this problem is solved, the sound development of human culture is unthinkable.

A technique conventionally known in coping with this piracy problem is "watermarking" by which copyright information is imprinted into the contents. Namely, certain data on the original copyright holder is watermarked in the contents, so that the ownership can be protected when the contents are illegally copied.

The contents are used to be something that is delivered to ordinary users for their enjoyment. Recently, however, a new culture is about to be widespread where people begin creating the contents by themselves, producing CG images or showing in their home pages some artistic photographs they have taken with their own digital cameras. Moreover, with the wider use of image processing tools, there are increased occasions where people use images they have shot themselves or downloaded from Web sites or like sources by processing them by themselves. The present invention has been made in view of the foregoing circumstances and an object thereof is to provide a digital contents managing technology in response to these new situations.

A preferred embodiment of the present invention relates to a content managing method. This method includes: acquiring original a digital content; performing a predetermined image processing or audio processing on the content; and recording, in a secondary content generated by the processing, both first copyright information on the original content and second copyright information on the secondary content.

According to another preferred embodiment, a content managing method includes: acquiring an original digital content; performing a predetermined image processing or audio processing on the content; and recording, in a secondary content generated by the processing, second copyright information on the secondary content, while first copyright information on the original content are maintained therein.

Just as there possibly exists a copyright to the original content, there possibly arises a copyright intrinsic to the secondary content as well. When some original contents are altered by image processing or audio processing, there is a possibility that such the alteration may be questioned and be in conflict with the right to alter the contents. On the contrary, when the original contents are altered so much that almost no trace of the aesthetic factor of the original remains, it may be judged that the original contents have lost its copyright altogether. Furthermore, if a copyright intrinsic to the secondary contents has already arisen, then there need be a scheme by which the copyright of the secondary contents are protected.

Accordingly, the present embodiment provides a scheme of recording, inside and/or outside the digital content, necessary information which is, in this case, the first copyright information and the second copyright information, while subjective judgment on copyrights is put into the hands of persons concerned. It is to be appreciated here that there are not only the active case but also the passive case of recording or retaining the first copyright. In other words, if some information remains recorded and is being kept unless it is actively erased, such a processing is also considered within the range of intent of the present invention.

In a preferred embodiment according to the present invention, at least parts of the first copyright information and the second copyright information may be imprinted as a watermark into the secondary content. The watermark may be visible or audible, or otherwise. In other words, the watermark may be such that there are two cases of either perceptible or imperceptible. Moreover, the second copyright information may contain information on detail of the processing. For example, the second copyright information may contain information that indicates the elements of image processing performed, such as cutting, scaling, rotation, color change and other arbitrary processings. And, in this case, the relationship of such image processings with the original contents becomes clearer. The same is similarly applicable to audio processing.

The method according to the present invention may further include: examining, prior to the processing, to see whether a person who intends to perform the processing has a right to alter the original contents; and permitting the person to perform the processing only when the person who performs the processing has the right to alter the original contents. In this embodiment, the right to alter the contents can be checked strictly and thus violation of the copyright by alteration can be prevented.

The method according to the present invention may further include: registering in a database the secondary content and the original content in such a manner as to be interrelated with each other. Then the relationship between the original content and the secondary content become clearer, thus being useful in terms of copyright management; besides there may be an interaction in which a high value of one of the contents may be reflected in the value of the other.

Another preferred embodiment relates to a digital content managing apparatus. This apparatus includes: an input unit which acquires an original digital content; a main processing unit which performs a predetermined image processing or audio processing on the content; and an imprinting unit which records, in a secondary content generated by the main processing unit, both first copyright information on the original content and second copyright information on the secondary content.

In still another embodiment, there is provided a digital content managing apparatus includes: an input unit which acquires an original digital content; a main processing unit which performs a predetermined image processing or audio processing on the content; and an imprinting unit which records, in a secondary content generated by the main processing unit, second copyright information on the secondary content, while first copyright information on the original content is kept therein.

Still another preferred embodiment relates also to a content managing apparatus. This apparatus includes an imprinting unit which, after a predetermined image processing or audio processing is performed on an original content, records both first copyright information on the original content and second copyright information on a secondary content, in the secondary content generated by the processing.

In still another preferred embodiment, there is provided a content managing apparatus which includes an imprinting unit which, after a predetermined image processing or audio processing is performed on an original content, records second copyright information on a secondary content in the secondary content generated by the processing while first copyright information on the original content is maintained therein.

It is to be noted that any arbitrary replacement or substitution of the above-described structural components and the processing processes, expressions replaced or substituted in part or whole between a method and an apparatus as well as addition thereof, and expressions changed to a computer program that realizes contents of those processings, recording medium or the like that records such the computer program are all effective as and encompassed by the present embodiments.

Moreover, this summary of the invention does not necessarily describe all necessary features so that the invention may also be sub-combination of these described features.

The present invention is now described concretely with the following figures.

Fig. 1 shows a structure of a content managing apparatus according to an embodiment of the present invention.

Fig. 2 is a flowchart showing a processing procedure for the content managing apparatus according to the present embodiment.

Figs. 3A, 3B and 3C illustrate copyright information written in the contents, according to the present embodiment.

The invention will now be described based on the preferred embodiments, which do not intend to limit the scope of the present invention, but exemplify the invention. All of the features and the combinations thereof described in the embodiment are not necessarily essential to the invention.

As have already described, when secondary contents are prepared from and based on original contents, it is desirable that both of the contents be managed. According to the present embodiments hereinbelow, copyright information on the original contents (hereinafter referred to as first copyright information or simply as FCI) and copyright information on the secondary contents themselves (hereinafter referred to as second copyright information or simply as SCI) are both imprinted or embedded into the secondary contents.

Moreover, as an example of image processings for the contents, a technology (referred to as "base technology" hereinafter) which was proposed in Japanese Patent No. 2927350 owned by the same assignee is utilized. In the base technology, a matching between two key frames is computed using critical points, corresponding points between those key frames are detected pixel by pixel, and, based on results thereof, interpolation computation is performed, so as to generate an intermediate frame between the key frames. Thus, smooth motion pictures between key frames, morphing images, viewpoint changing images and so forth can be generated. In this patent specification, the key frames are considered as the original contents while the intermediate frame is considered as the secondary contents.

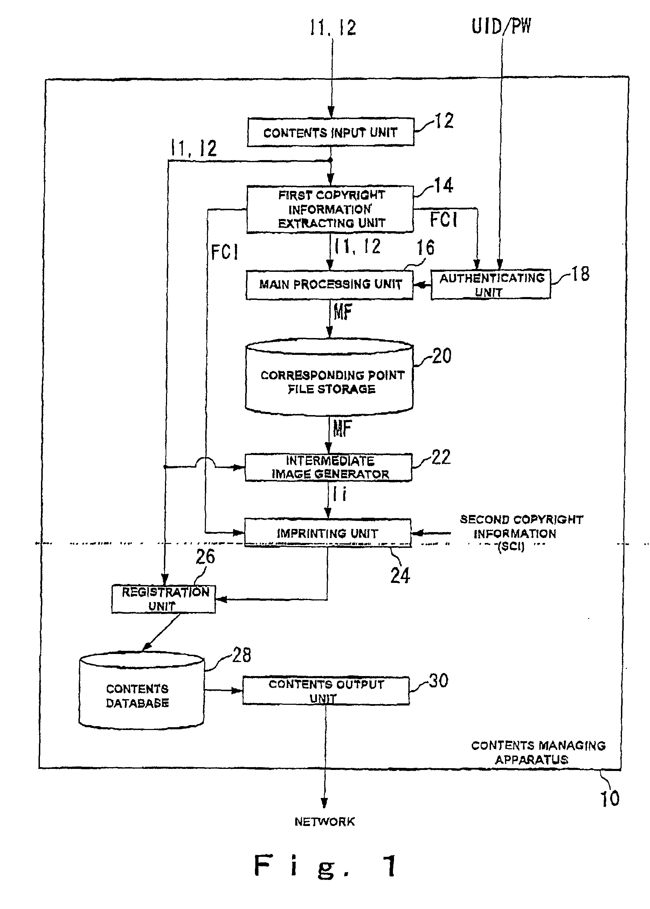

Fig. 1 shows a structure of a content managing apparatus 10 according to a preferred embodiment of the present invention. A content input unit 12 inputs two key frames I1 and I2. A first copyright information extracting unit 14 extracts the first copyright information FCI from the key frames and sends it to an imprinting unit 24 described later. The key frames themselves are sent to a main processing unit 16.

The main processing unit 16, which is a processor that carries out processings according to the base technology, detects critical points through a two-dimensional search in each of the key frames, and specifies sets of corresponding pixels between the two key frames. The corresponding point file MF thus generated is stored in a corresponding point file storage 20.

In this preferred embodiment, an optional authenticating unit 18 is provided also in the apparatus 10, and the authenticating unit 18 authenticates a person who performs this image processing, based on user identification information UID and a password PW. When the authenticated user is a person legally authorized to alter the contents, such as a copyright holder indicated in the first copyright information FCI, the authenticating unit 18 instructs permission to the processing by the main processing unit 16.

An intermediate image generator 22 performs interpolation on the position and the pixel value, that is, color, between the corresponding pixels, based on data of the two key frames I1 and I2 and the corresponding point file MF between them, and generates an intermediate frame Ii at an arbitrary temporal position or spatial position between the key frames. The intermediate frame Ii thus generated is outputted to the imprinting unit 24.

The imprinting unit 24 imprints the first copyright information FCI and the preset second copyright information SCI as watermarks on the intermediate frame Ii. The second copyright information SCI may be an ID assigned by a software or hardware means to this content managing apparatus 10 itself or information on a user who utilizes this content managing apparatus 10. In any case, the intermediate frame Ii, which is contents imprinted with copyright information, is registered in a contents database 28 by an operation of a registration unit 26. The registration unit 26 registers the intermediate frame and the two key frames in such a way that the intermediate frame Ii is associated with the two original key frames I1 and I2.

A content output unit 30 outputs the intermediate frame Ii or the key frames I1 and I2 associated therewith to an arbitrary destination, such as a network or storage. Thus, the content output unit 30 may have a communication function, a memory control function and/or a display control function therein. In other words, the content output unit 30 may be so structured as to serve intended purposes.

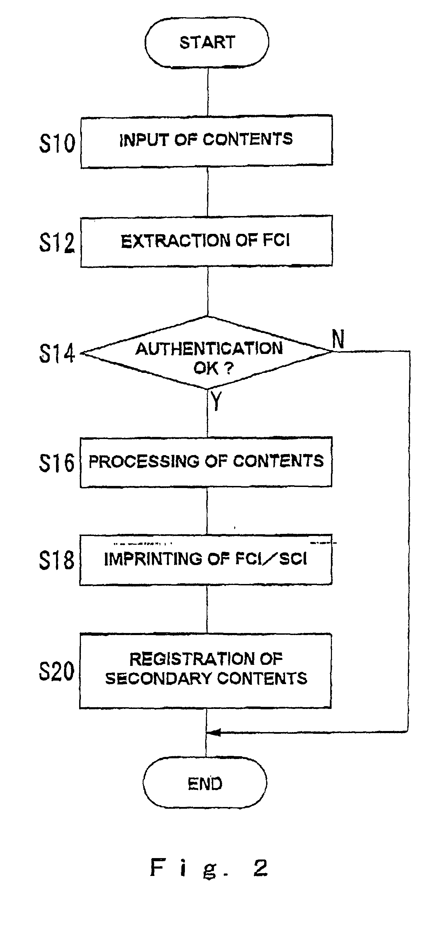

Fig. 2 is a flowchart showing a somewhat generalized procedure of processing by this content managing apparatus 10. First the content input unit 12 inputs original contents (S10). Then the first copyright information FCI is extracted or acquired from the contents (S12). Then user authentication is carried out (S14), and when it can be judged that the user has the right to alter the contents (Y in S14), permission is given for the processing by the main processing unit 16 (S16). However, when the judgment cannot be made that the user has the right to alter the contents, or when the user does not have the right to alter the contents (N in S14), the processing is terminated at this point.

Then the imprinting unit 24 imprints the first copyright information FCI and the second copyright information SCI into generated secondary contents (S18), and finally the registration unit 26 registers this contents together with the original contents in the contents database 28 (S20).

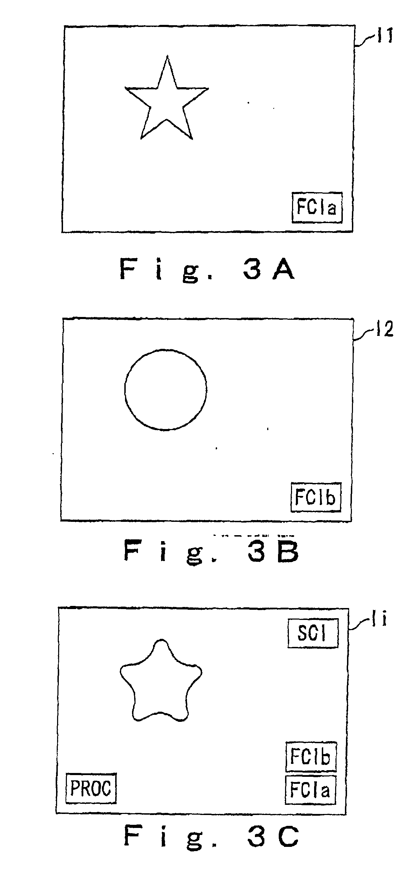

Figs. 3A, 3B and 3C show images of the first key frame I1, the second key frame I2 and the generated intermediate frame Ii, respectively. As is clearly seen in the same figures, the intermediate frame Ii is an image intermediate between the two key frames I1 and I2. The first key frame I1 and the second key frame I2 are imprinted with their respective original copyright information, namely, the first copyright information FCIa and FCIb, and the intermediate frame Ii is imprinted with the second copyright information SCI in addition thereto. Moreover, information PROC which shows the substance of processing added to the original contents is described to the intermediate frame Ii.

The first copyright information FCI and the second copyright in formation SCI include, for instance, the name of a creator, the owner of distribution right and the owners of other copyright or related rights, the date of creation, the place of creation, the title of the contents, the format of the original data, the statement concerning the copyright, such as conditions for the renouncement of the copyright, and other bibliographical information.

The information PROC on the substance of processing includes, for instance, details of processings, such as adjustment of color balance, conversion to monochrome, filtering, lowering of resolution, edge enhancement, interpolation as in preferred embodiments, outline of manual editing, synthesis of CG with actually taken photographs, other syntheses and so forth. Similarly, information on audio processing may include any arbitrary processing by known technologies.

Since description of these items of processing can become very long, elements of processing may be coded in advance to be described so as to enable a briefer description. For example, high-pass filtering may be written as "HPF," and rotation by 30 degrees as "ROT+30." These elements of processing may be acquired from a log file of a processing which is actually performed by the content managing apparatus 10 and they may be included in the second copyright information SCI.

Although the present invention has been described based on preferred embodiments, the present invention is not limited to and by them. Various modifications thereto are possible and include the following modified technologies.

Although the content managing apparatus 10 according to the preferred embodiment performs image processing by itself, it may acquire secondary contents after the image processing by some external means and then imprints or embeds the first copyright information FCI and the second copyright information SCI into this acquired secondary contents.

The first copyright information extracting unit 14 may be so structured that it performs no specific processing, and in this case, no data may be sent to the imprinting unit 24 as the first copyright information FCI. In this case, the imprinting unit 24 writes the second copyright information SCI only. The advantage of this modification lies in that there will be no inconvenience caused even when there exists no first copyright information FCI in the original contents and that even if there does, the first copyright information FCI is expected to have a high probability of remaining unless an erasure step is actively taken.

Although the image matching and generation of an intermediate image are considered as a processing of the contents in the above embodiment, this may of course be any arbitrary processing which may be not only image processing but also any arbitrary audio processing. For example, it may be the cutting of a part of a movie, or a change in the arrangement of a piece of music insofar as secondary contents different from the original contents are generated.

In the present embodiments, the first copyright information extracting unit 14 extracts the first copyright information FCI from the original contents. But when the original contents include not only contents data but also reference or management region, such as header data, the first copyright information FCI may be acquired from the management region, not specifically from the contents data themselves. The FCI may also be acquired from a route and source (not shown) completely different from the original contents, via a network or the like.

Similarly, the imprinting unit 24 is not always required to directly imprint the copyright information into the data itself of secondary contents, but may imprint it in the management region of the contents or may store it in a data region related to a site relating to the contents, in a more flexible manner.

Although still images are used as an example in the present embodiments, this may of course be moving pictures. One suitable example may be a newly generated movie in which all the human characters in the original have been replaced by animals. Moreover, a data format as being contents may be changed completely, such as in cases where still images are changed to moving pictures and moving pictures are transformed into music based on their images or frequencies, and so forth.

A few other embodiments are given in the following paragraphs.
1. A content managing apparatus, including:
   an imprinting unit 24 which, after a predetermined image processing or audio processing is performed on an original content, records both first copyright information on the original content and second copyright information on a secondary content, in the secondary content generated by the processing.
2. A content managing apparatus 10, including:
   an imprinting unit 24 which, after a predetermined image processing or audio processing is performed on an original content, records second copyright information on a secondary content in the secondary content generated by the processing while first copyright information on the original content is maintained therein.

Although the present invention has been described by way of exemplary embodiments, it should be understood that many changes and substitutions may further be made by those skilled in the art without departing from the scope of the present invention which is defined by the appended claims.

## Claims

1. A content managing method, including:
acquiring an original digital content;
performing a predetermined image processing or audio processing on the original content; and
recording, in a secondary content generated by said performing the processing, both first copyright information on the original content and second copyright infoxmation on the secondary content.

2. A method according to Claim 1, wherein the recording process records, instead of both the first and second copyright information, at least the second information in the second content while maintaining the first copyright information on the original content in the second content.

3. A method according to Claim 1, wherein at least part of the first copyright information and the second copyright information is imprinted into the secondary content as a watermark.

4. A method according to Claim 1, wherein the second copyright information includes information on detail of the processing.

5. A method according to Claim 1, further including:
examining, prior to the processing, whether or not a person who performs the processing has a right to alter the content; and
permitting execution of the processing only when the person who performs the processing has the right.

6. A method according to Claim 1, further including
registering the secondary content and the original content in a database in such a manner that the secondary content and the original content are associated therewith.

7. A content managing apparatus (10), comprising:
an input unit (12) which acquires an original digital content;
a main processing unit (16) which performs a predetermined image processing or audio processing on the content; and
an imprinting unit (24) which records, in a secondary content generated by said main processing unit (16), both first copyright information on the original content and second copyright information on the secondary content.

8. An apparatus (10) according to Claim 7, wherein the imprinting unit (24) records, instead of both the first and second copyright information, at least the second information in the second content while maintaining the first copyright information on the original content in the second content.

9. An apparatus (10) according to Claim 7, further comprising:
an authenticating unit (18) which examines, prior to the processing, whether or not a person who performs the processing has a right to alter the content and permits execution of the processing only when the person has the right.

10. An apparatus (10) according to Claim 7, further comprising:
a registration unit (26) which registers the secondary content and the original content in a database in such a manner that the secondary content and the original content are associated therewith.

11. A computer program executable by a computer, **characterized in that** it performs the method of Claim 1.

12. A computer program executable by a computer, **characterized in that** it performs the method of Claim 2.
